# EUROPEAN PATENT APPLICATION

(11) **EP 4 012 135 A1**
(43) Date of publication of application: **15.06.2022**
(21) Application number: 20213843.4
(22) Date of filing: 14.12.2020
(51) Int. Cl.: E04F 15/02, E04F 15/10, F24F 13/02, F24F 6/00, F24F 6/14

(54) **COOLABLE WPC FLOOR SYSTEM AND METHOD FOR COOLING A WALKING SURFACE OF A WPC FLOOR SYSTEM**

(71) Applicant: Nagy-Varga, Viktor, 1047 Budapest (HU)
(72) Inventor: Nagy-Varga, Viktor, 1047 Budapest (HU)
(74) Representative: Kacsuk, Zsófia

(57) **Abstract**

The invention relates to a coolable WPC floor system (10) comprising a plurality of WPC floor elements (12) separated by dilatations (20) in the installed state, characterized in that in at least a portion of the dilatations (20) a pipe (30) provided with nozzles (32) for wetting the walking surface (14) of the floor elements (12) is arranged.

The invention further relates to a method of cooling a walking surface of a WPC floor.

## Description

The present invention relates to a coolable WPC floor system comprising a plurality of WPC floor elements separated by dilatations when installed.

The invention further relates to a method for cooling the walking surface of a WPC floor.

Outdoor surfaces (e.g. terraces, sun terraces, pool areas, etc.) are often covered with so-called WPC (Wood Plastic Composite) floor elements. WPC is a composite material made of wood and plastic, consisting of wood fibre and various thermoplastic plastics and other additives (e.g. paraffin, pigments, UV stabilizers, etc.). The wood content of the composite varies between 50 and 90%. The wood required for the composite is most often provided by wood or agricultural byproducts (e.g., chips, kernels, etc.), and the plastic is also usually a recycled plastic such as polyethylene, PVC, ABS, PLA, or polystyrene. As most of the production is made using recycled materials and no pollutants are generated in the process, WPC can be considered to be particularly environmentally friendly.

WPC coatings are usually produced by extrusion or injection moulding at high pressure and temperature. The elements can be thermoformed to the desired shape and size. WPC floor elements for outdoor floors are usually elongated tiles that are laid down so as to be separated by dilatations (spaced from each other). WPC floor elements can be fastened, for example, with screws, clips, angle clamps, or in any manner well known to those skilled in the art. The advantage of WPC floor elements is that they look like wood, but are easier to machine, less prone to cracking and rotting, and require less maintenance.

However, the biggest disadvantage of WPC floor elements is that, unlike wood, their surface can become very hot due to direct sunlight (up to 80 degrees Celsius), which makes it uncomfortable to touch WPC floor elements for example when walking thereon barefoot, or it may heat the surrounding microclimate in an unwanted manner.

The inventor has discovered that cooling a floor made of WPC floor elements can be solved easily and cost-effectively by continuously wetting the walking surface. Heat dissipation during water evaporation can cool the surface of WPC floor elements.

The inventor has also found that the dilatations between the WPC floor elements are suitable for receiving a pipe provided with nozzles, which ensures even and continuous wetting of the walking surface, and thus efficient cooling.

The inventor has also discovered that by arranging the pipe in dilatations, a floor system can be created the surface of which, in the absence of protruding parts, can be used without hindrance and which does not differ substantially in appearance from conventional WPC floors, thus retaining the original aesthetics of the floor. Since the piping with nozzles can be retrofitted in the dilatations, the cooled floor system according to the invention can also be created in already installed WPC floors.

The objective of the invention is to provide a WPC floor system and method which is free from the disadvantages of the prior art solutions, i.e. by means of which the continuous and even cooling of the WPC floor can be solved easily and efficiently without significantly altering the original appearance of the floor.

The invention is based on the recognition that the dilatations between the WPC floor elements run in a regular arrangement in the floor and are suitable for receiving pipes, so that the walking surface of the floor can be evenly wetted by means of nozzles arranged along the length of the pipes. Furthermore, because the pipe is sunk into the dilatation, there are no protruding parts from the plane of the walking surface that would impede traffic on the floor or alter the aesthetic appearance of the floor.

According to the invention, the above objective is achieved by means of the coolable WPC floor system according to claim 1.

The objective of the invention is further achieved by a method according to claim 10 for cooling a walking surface of a WPC floor.

Some preferred embodiments of the invention are defined in the dependent claims. Further details of the invention will be described with reference to the accompanying drawings.
Figure 1a is a schematic plan view of a first exemplary embodiment of a cooled WPC floor system according to the invention.
Figure 1b is a schematic plan view of a second exemplary embodiment of a cooled WPC floor system according to the invention.
Figure 2 is a schematic sectional view of a pipe comprising nozzles according to the invention.
Figure 3 is a sectional view of a floor system according to the invention, illustrating the installed state of the pipe shown in Figure 2.

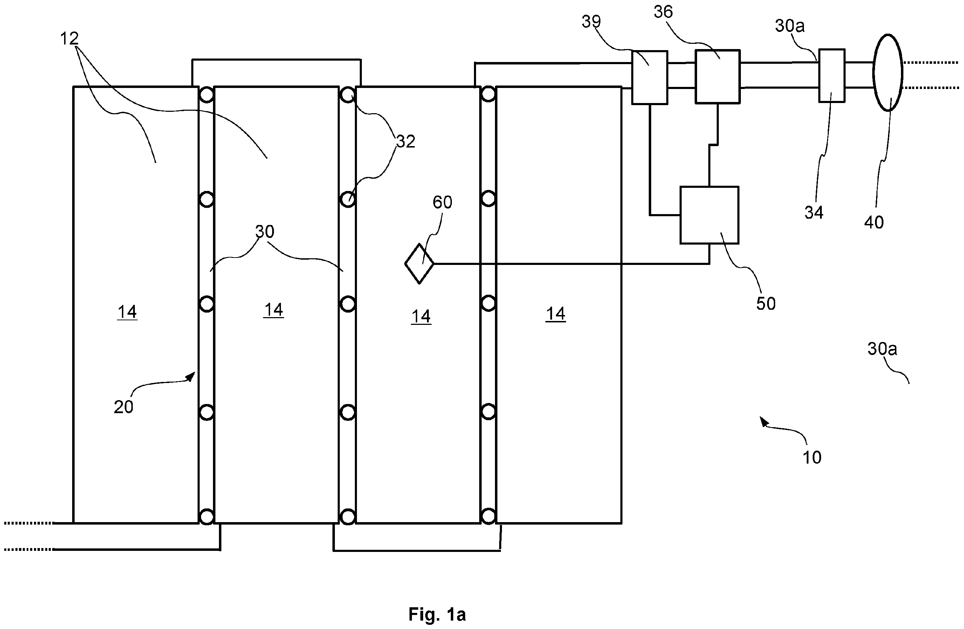

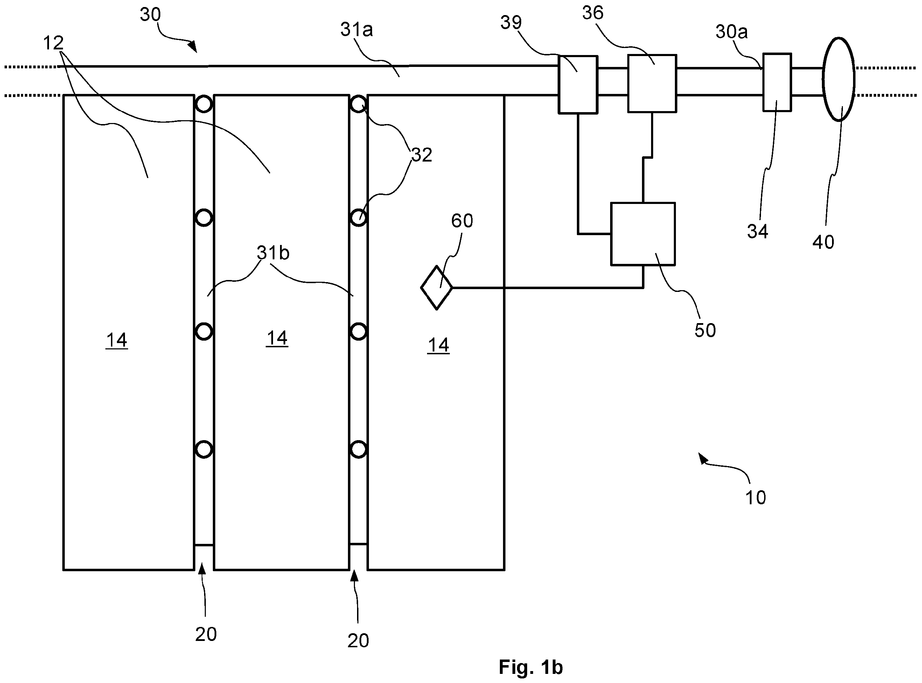

Figure 1a is a schematic plan view of an exemplary embodiment of a coolable WPC floor system 10 according to the present invention. The representation is not to scale for better illustration. The floor system 10 comprises a plurality of WPC floor elements 12, the surface of which together defines a flat walking surface 14. The WPC 12 floor elements can be, for example, commercially available floor elements 12 known per se, which are separated by dilatations 20 when installed. In the context of the present invention, dilatation 20 is understood to mean continuous, i.e. permeable, longitudinal grooves running between adjacent floor elements 12, the width and depth of which are typically of the order of centimetres. The depth of the dilatations 20 is determined by the thickness of the floor elements 12. Depending on the type of WPC floor elements 12, the dilatations 20 typically run along parallel lines, as can be seen, for example, in Figures 1a and 1b, or optionally form an angle, such as a right angle, as is known to those skilled in the art.

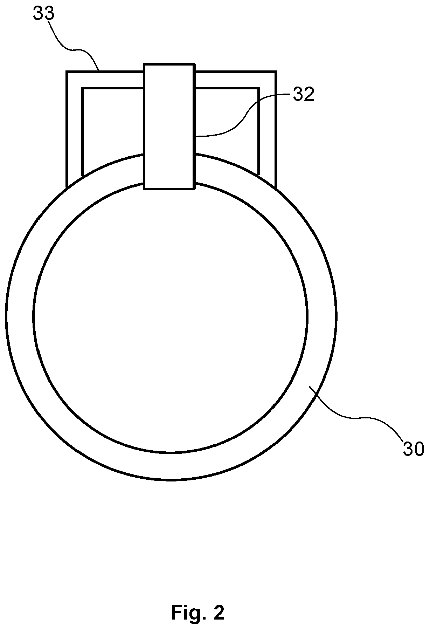

In the floor system 10 according to the invention, a pipe 30 provided with nozzles 32 for wetting the running surface 14 of the floor elements 12 is arranged in at least part of the dilatations 20, which pipe 30 is adapted to transport water. In a particularly preferred embodiment, the pipe 30 is flexible and may be made of, for example, rubber or plastic, such as polyethylene. In the embodiments shown in Figure 1a, the floor system 10 comprises a single pipe 30 which is bent to follow the shape of the floor elements 12 and placed in the dilatations 20. In the embodiment shown in Figure 1b, the pipe 30 comprises a backbone 31a running at the edge of the floor system 10 and branches 31b extending therefrom and extending parallel to the dilatations 20. The dimensions, diameter of the pipe 30 are selected to fit the dilatation 20. The water-carrying portion of the pipe 30 is preferably circular in cross-section, but of course other cross-sections (e.g., ellipse, square, etc.) are conceivable. In an exemplary embodiment, the pipe 30 has a protrusion 33 that fills the portion of the dilatation 20 in the plane of the walking surface 14, and the nozzles 32 are embedded in the protrusion 33 as shown in Fig. 2. The protrusion 33 can be formed, for example, by fitting a straight column along its length to a pipe 30 of circular cross-section, the material of which is preferably chosen to be the same as the material of the pipe 30 (see Fig. 2). The upper surface of the protrusion 33 fits into the plane of the walking surface 14 and fills the gap between adjacent floor elements 12. The pipe 30 is preferably arranged in the dilatation 20 in such a way that the openings of the nozzles 32 lie substantially in the plane of the walking surface 14 of the floor, possibly below it, i.e. they do not obstruct traffic on the floor.

The floor elements 12 are fastened to each other and to the ground in the dilatations by means of known fastening elements 24 (e.g. fastening clips).

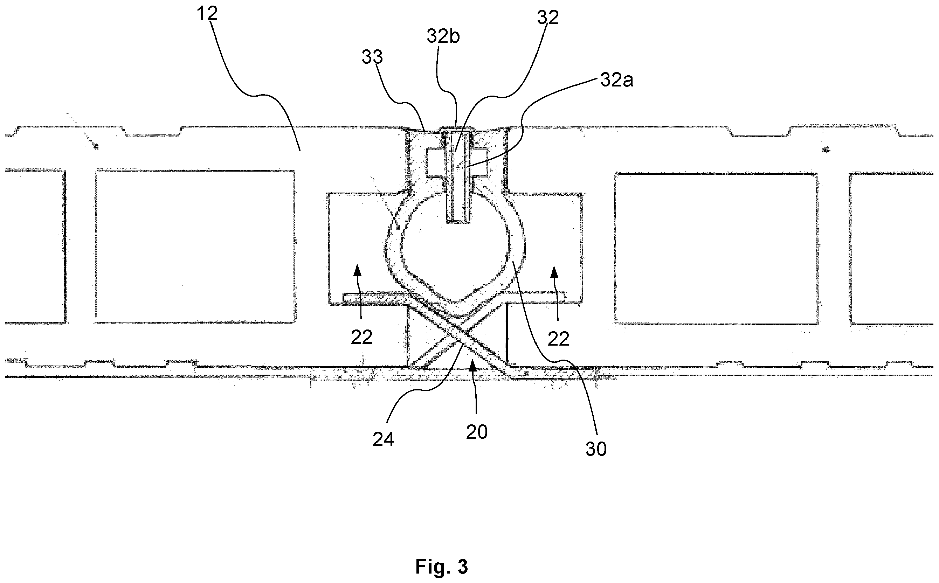

The pipe 30 can be fixed in the dilatations 20, for example, by gluing, by means of form-fitting, etc. In the embodiment shown in Fig. 3, grooves 22 run in the opposite surface of the floor elements 12 into which the flexible pipe 30 protrudes. In this way, a form-fitting joint is formed which secures the pipe 30 in the dilatation 20, so that in this case gluing is not necessary.

In the embodiments shown in Figures 1a and 1b, the nozzles 32 are spaced substantially equidistant along the length of the pipe 30. The distance between the adjacent nozzles 32 is preferably a few centimetres or a few times ten centimetres, e.g. 5-30 cm. It should be noted, however, that embodiments are conceivable in which the distance between adjacent nozzles 32 differs along the length of the conduit 30, for example as a function of the distance between the dilatations 20. The distance between the nozzles 32 should be chosen so that the water leaving the nozzles 32 can evenly cover the walking surface 14 to be cooled. It also depends on the shape of the floor and the distance between the dilatations 20.

Valves, for example, can be used as the nozzles 32. However, the construction of the nozzle 32 can also be very simple, e.g. a metal rivet 32a may be inserted through the wall of the pipe 30 and fixed therein by gluing and in it a pin 32b may be fixed e.g. by compression, as can be seen in Fig. 3.

In a preferred embodiment, the nozzles 32 are designed to produce water sprays (small water droplets) that deliver water by spraying, evenly distributing the water on the walking surface 14 and/or in the air space above the walking surface 14.

The water enters the pipe 30 through an inlet 30a and can preferably only leave it through the nozzles 32. The end of the pipe 30 opposite the inlet 30a is either closed as shown in Figure 1b, or optionally both ends of the pipe 30 are provided with an inlet 30a, so that the pipe 30 is supplied with water on both sides (not shown in the figures). The inlet 30a of the pipe 30 may optionally be connected to a liquid tank (not shown in the figures) or, for example, directly to a piped water supply network. In the latter case, the inlet 30a can be provided with an adapter 34, by means of which the pipe 30 can be easily connected to the piped water supply network, for example to its tap 40. Preferably, a pressure control valve 36 is connected between the water distributing pipe 30 serving to cool the floor and the water supply network, by means of which the pressure in the pipe 30 can be reduced below the pressure of the water supply network and adjusted to the desired value, or water flow can be stopped through the pipe 30 by closing the valve 36. That is, the valve 36 is used to control the fluid permeability of the pipe 30. The fluid (water) can be transported within the pipe 30 e.g. by means of a pump connected to the fluid tank or by the water supply network's own pressure, which can be adjusted by means of the pressure control valve 36, as will be apparent to a person skilled in the art.

The valve 36 is designed to be controlled manually or preferably remotely. In the latter case, the pressure control valve 36 is in communication with a control unit 50 by means of which the valve 36 can be controlled. The valve 36 may be, for example, an electrohydraulic valve 36, but optionally other remotely controllable valves 36 (e.g., solenoid valves, etc.) may be used, as will be apparent to those skilled in the art. In the context of the present invention, the term control unit 50 is to be construed broadly and includes all hardware devices suitable for collecting and processing data, and controlling the valve 36 based thereon, such as a computer, laptop, SoC, microcontroller, and the like. By appropriately sizing the nozzles 32 and / or by appropriately controlling the pressure control valve 36, it is possible to set the flow rate and droplet size of the water exiting the line 30 through the nozzles 32, and accordingly different types of water outlet can be achieved, such as dripping, flowing, squirting, sifting, spraying, splashing, spouting, etc.

In a preferred embodiment, the floor system 10 includes a temperature sensor 60 being in data communication with the control unit 50 for measuring the temperature of the walking surface 14. The temperature sensor 60 may be a thermometer operating on any principle (e.g., thermocouple, resistance thermometer, etc.) suitable for measuring the temperature of the walking surface 14 and transmitting the measured data to the control unit 50. The data connection can be implemented, for example, by means of wired connection or by known wireless technologies (Wifi, Bluetooth, etc.), as will be apparent to a person skilled in the art. When controlling the pressure control valve 36, the control unit 50 preferably takes into account the received temperature data, the method of which will be explained later.

In a possible embodiment, the floor system 10 comprises one or more pressure measuring sensors 39 for measuring the pressure of the liquid flowing through the cross section of the pipeline 30, which sensor is in data communication with the control unit 50. The control unit 50 preferably takes into account the data received from the sensor 39 when controlling the pressure control valve 36.

Of course, the floor cooling system may include a plurality of independently openable sprinkling circuits formed by separate pipes 30 each having a separate pressure control valve 36. The pipe 30 of each circuit can be provided with a separate pressure measuring sensor 39, and a separate temperature sensor 60 can be arranged on one (or even more) of the associated floor elements 12. The control is preferably performed by the same control unit 50 for each circuit, but of course more than 50 control units can be provided.

The invention further relates to a method for cooling a WPC floor. The method is preferably carried out by means of the floor system 10 according to the invention, so that the operation of the floor system 10 will now be described together with the method according to the invention.

In the method according to the invention, the pipe 30 provided with nozzles 32 is placed in at least a part of the dilatations 20 between the WPC floor elements 12. In a possible embodiment, the pipe 30 is placed in the already completed WPC floor, i.e. after the installation of the WPC floor elements 12, in the dilatations 20 between the WPC floor elements 12. Thus, the coolable floor system 10 of the present invention can be built into already assembled WPC floors. In another possible embodiment, the pipe 30 is placed in the dilatations 20 between the WPC floor elements 12 during the formation of the WPC floor, when the WPC floor elements 12 are being laid down. The pipe 30 is preferably arranged in the dilatations 20, and the nozzles 32 are formed along the length of the pipe 30 so that the nozzles 32 are distributed as evenly as possible on the walking surface 14, so that the water flowing out (leaking out) of them is distributed as evenly as possible. walking surface 14.

In the next step of the process, water is made to flow into the pipe 30 and water is delivered to the walking surface 14 of the WPC floor through the nozzles 32. The water is fed through the inlet 30a to the pipe 30, which is preferably connected to the water tap 40 of the piped water supply network by means of an adapter 34. The pressure of the water in the pipe 30 is preferably set between 0.1 and 1.2 bar by means of the valve 36, but it is of course also possible to use different pressure. The preferred embodiment shown in Figures 1a and 1b comprises a pressure measuring sensor 39. In this case, the pressure sensor 39 transmits the measured data to the control unit 50, which sets the desired pressure by controlling the valve 36 based on the received data. The use of the pressure sensor 39 is also advantageous in that a change in the set pressure can be inferred and the system can be shut down automatically by means of the control unit 50. For example, a sudden drop in pressure may indicate damage to the pipeline 30 (crack, rupture, etc.) and water leakage, while an increase in pressure may indicate clogging of the pipeline 30.

The water flowing out of the nozzles 32 spreads on the walking surface 14 to form a thin layer of liquid which, during evaporation, removes heat from the walking surface 14, thereby cooling the WPC floor and the surrounding microclimate.

In a further preferred embodiment, the temperature of the walking surface 14 is measured by means of the temperature sensor 60 and the measured data is transmitted to the control unit 50. The amount of water delivered to the walking surface 14 is controlled according to the measured temperature, for example, so that if the measured temperature exceeds a preset temperature value (first threshold), the valve 36 is opened by the control unit 50 to deliver water to the walking surface 14, and when the measured temperature drops below the set temperature (or a second specified threshold), the valve 36 is closed. In this way, the temperature of the walking surface 14 can be kept within a preset range.

An advantage of the floor system 10 and method of the present invention is that it does not use or produce environmentally harmful materials or greenhouse materials. Industrial water (water not suitable for drinking, collected or recycled from groundwater, rainwater) is also suitable for its operation, and its energy consumption is minimal. The solution according to the invention is suitable not only for cooling the walking surface 14 of the WPC floor, but also for cooling the air space and microclimate above the floor.

It will be apparent to those skilled in the art that alternative solutions are conceivable with respect to the embodiments presented herein, but which are within the scope of the appended claims.

## Claims

1. A coolable WPC floor system (10) comprising a plurality of WPC floor elements (12) separated by dilatations (20) in the installed state, **characterized in that** in at least a portion of the dilatations (20) a pipe (30) provided with nozzles (32) for wetting the walking surface (14) of the floor elements (12) is arranged.

2. The floor system (10) according to claim 1, **characterized in that** the pipe (30) is arranged in the dilatation (20) in such a way that the openings of the nozzles (32) fall substantially in a plane of the walking surface (14) of the floor.

3. The floor system (10) according to claims 1 or 2, **characterized in that** the pipe (30) is flexible.

4. The floor system (10) according to any one of claims 1 to 3, **characterized in that** the pipe (30) has a protrusion (33) filling the part of the dilation (20) in the plane of the walking surface (14) and the nozzles (32) are embedded in the protrusion (33).

5. The floor system (10) according to one of claims 1 to 4, **characterized in that** the nozzles (32) are in the form of a valve, a metal tube, or a pin fixed in a rivet.

6. The floor system (10) according to any one of claims 1 to 5, **characterized in that** the pipe (30) comprises an adapter (34) for connecting it to a piped water supply network, and a pressure control valve (36) is arranged between the pipe (30) and the water supply network.

7. The floor system (10) according to any one of claims 1 to 6, **characterized in that** it comprises a temperature sensor (60) for measuring the temperature of the walking surface (14) and the pressure control valve (36) is designed to be controlled by a control unit (50) which is configured to take into account the temperature data received from the temperature sensor (60) when controlling the pressure control valve (36).

8. The floor system (10) according to claim 7, **characterized in that** a pressure sensor (39) connected to the control unit (50) is connected to the pipe (30), said control unit (50) being configured to take into account the data received from the pressure sensor (39) when controlling the pressure control valve (36).

9. The floor system (10) according to any one of claims 1 to 8, **characterized in that** the nozzles (32) are arranged at substantially equal distances from one another along the length of the pipe (30).

10. A method of cooling a walking surface (14) of a WPC floor, the WPC floor comprising WPC floor elements (12) separated by dilatations (20), the method **characterized by**
- placing a pipe (30) provided with nozzles (32) in at least a part of the dilatations (20) between the WPC floor elements (12),
- making water flow into the pipe (30) and delivering water to the walking surface (14) of the WPC floor through the nozzles (32).

11. The method according to claim 10, **characterized by** placing the pipe (30) in the dilatations (20) between the WPC floor elements (12) in the finished WPC floor (12) after the installation of the WPC floor elements (12).

12. The method according to claim 10, **characterized by** placing the pipe (30) in the dilatations (20) between the WPC floor elements (12) when laying down the WPC floor elements (12) during the installation of the WPC floor.

13. The method according to any one of claims 10 to 12, **characterized by** connecting the pipe (30) to a piped water supply network and setting the water pressure in the pipe (30) between 0.1 and 1.2 bar.

14. The method according to any one of claims 10 to 13, **characterized by** providing the nozzles (32) in the form of a valve, a metal tube, or a pin fixed in a rivet.

15. The method according to any one of claims 10 to 14, **characterized by** measuring the temperature of the walking surface (14) and controlling the amount of water delivered to the walking surface (14) according to the measured temperature.
